# EUROPÄISCHE PATENTANMELDUNG

(11) **EP 1 031 374 A2**
(43) Veröffentlichungstag der Anmeldung: **30.08.2000**
(21) Anmeldenummer: 99125847.6
(22) Anmeldetag: 24.12.1999
(51) Int. Cl.: B01J 8/02, B01J 19/24, C01B 3/32, C01B 3/38, C01B 3/58

(54) **Vorrichtung zur Ausnutzung bei einer katalytischen Reaktion entstehender Wärme**

(30) Priorität: 23.02.1999 DE 19907665
(71) Anmelder: XCELLSIS GmbH, 73230 Kirchheim / Teck-Nabern (DE)
(72) Erfinder: Lamla, Oskar, 73266 Bissingen a.d. Teck (DE); Saling, Carlo, 73265 Dettingen/Teck (DE); Schüssler, Martin, 89073 Ulm (DE)
(74) Vertreter: Dahmen, Toni Dipl.-Ing.

(57) **Zusammenfassung**

Vorrichtung zur Ausnutzung bei einer katalytischen Reaktion entstehender Wärme mit einem ersten Bereich, welcher zum Erwärmen, insbesondere zum Verdampfen, wenigstens eines zu reagierenden Eduktes, insbesondere eines Reaktionsgemisches dient, und einem zweiten Bereich zur wenigstens teilweisen Durchführung der katalytischen Reaktion bzw. zur weiteren Reaktion bei der katalytischen Reaktion entstehender Reaktionsprodukte und/oder zur wenigstens teilweisen Abkühlung bei der katalytischen Reaktion entstehender Reaktionsprodukte, wobei der erste Bereich und der zweite Bereich in wärmeleitender Verbindung stehen.

## Beschreibung

Die vorliegende Erfindung betrifft eine Vorrichtung zur Ausnutzung bei einer katalytischen Reaktion entstehender Wärme nach dem Oberbegriff des Patentanspruchs 1, eine Vorrichtung zur Durchführung einer katalytischen Reaktion nach dem Oberbegriff des Patentanspruchs 7 und ein Verfahren zur Durchführung einer katalytischen Reaktion nach dem Oberbegriff des Patentanspruchs 11.

Es wird beispielsweise im Automobilbereich, aber auch bei anderen mobilen Anwendungen, angestrebt, Masse, Volumen und Kosten der benötigten Bauteile möglichst gering zu halten. Zur Gewährleistung eines problemlosen Kaltstarts müssen die für den Fahrbetrieb notwendigen Komponenten eine niedrige Gesamtmasse aufweisen und durch möglichst kurze Gaswege miteinander verbunden sein.

Bei einer sogenannten heterogen katalysierten Reaktion handelt es sich beispielsweise um die Wasserstofferzeugung aus Kohlenwasserstoff oder Alkohol, insbesondere Methanol (Methanol-Reformierung), unter Zuführung eines Kohlenwasserstoff oder Alkohol und Wasser umfassenden Reaktionsgemisches auf einen Katalysator. Weitere Beispiele sind die Kohlenmonoxid-Verringerung unter Freisetzung von Kohlendioxid in einer sogenannten Wasserstoff-Shift-Reaktion, die Kohlenmonoxid-Oxidation unter Zuführung eines CO-haltigen Gases und eines Ölhaltigen Gases auf einen Katalysator sowie das Verbrennen eines brennbaren Eduktes unter Zusatz eines 02-haltigen Gases in einem katalytischen Brenner.

Bei Wasserstoff-angetriebenen Fahrzeugen wird der benötigte Wasserstoff üblicherweise an Bord des Fahrzeugs aus Kohlenwasserstoffen, beispielsweise Methanol, gewonnen. Die Gewinnung von Wasserstoff aus Methanol basiert auf der Gesamtreaktion CH₃OH + H₂O → CO₂ + 3H₂. Zur Durchführung einer derartigen Reaktion wird in der Praxis ein den Kohlenwasserstoff und Wasserdampf umfassendes Reaktionsgemisch unter Zufuhr von Wärme an einem geeigneten Katalysator entlanggeleitet, um in einem ein- oder mehrstufigen Reaktionsablauf den gewünschten Wasserstoff zu erzeugen. Eine derartige Vorrichtung zur zweistufigen Methanol-Reformierung ist beispielsweise aus der EP 0 687 648 A1 bekannt. In der bekannten Vorrichtung wird das Reaktionsgemisch einem ersten Reaktor zugeführt, in dem nur ein Teilumsatz des Methanols angestrebt wird. Nach dem Durchströmen des ersten Reaktors wird das Gasgemisch, in welchem noch Anteile nicht umgesetzter Edukte enthalten sind, einem zweiten Reaktor zugeleitet, der restumsatzoptimiert aufgebaut ist.

Zur Gewährleistung eines wirksamen Katalysatorbetriebes ist es notwendig, die Edukte vor ihrer Zuführung zu dem Reaktor zu verdampfen. Hierzu werden in der Regel Wärmetauscher in Platten- oder Rohrbündelbauweise verwendet, da eine große wärmeübertragende Fläche benötigt wird.

Derartige Wärmetauscher werden auch zur Durchführung weiterer Verfahrensschritte bei der katalytischen Reaktion verwendet, beispielsweise zur Erwärmung oder Abkühlung von entstehenden Gasen oder zur Wärmezufuhr in katalytisch wirksame Materialien bzw. zu einer entsprechenden Abfuhr von Wärme aus diesen Materialien.

Als nachteilig bei bekannten Vorrichtungen beispielsweise zur Wasserstofferzeugung aus Kohlenwasserstoffen erweist sich, daß die Vielzahl der benötigten Bauteile, insbesondere der Wärmetauscher, zu insgesamt groß bauenden Vorrichtungen führt. Speziell für Anwendungen im mobilen Bereich wird jedoch angestrebt, die Masse, das Volumen (und somit auch die Kosten) der notwendigen Bauteile möglichst klein zu halten.

Aufgabe der Erfindung ist die Durchführung einer katalytischen Reaktion unter Verwendung möglichst weniger Bauteile, welche jeweils für sich genommen sowie insgesamt klein bauen.

Diese Aufgabe wird gelöst durch eine Vorrichtung zur Ausnutzung bei einer katalytischen Reaktion entstehender Wärme mit den Merkmalen des Patentanspruchs 1, eine Vorrichtung zur Durchführung einer katalytischen Reaktion mit den Merkmalen des Patentanspruchs 7 sowie ein Verfahren zur Durchführung einer katalytischen Reaktion mit den Merkmalen des Patentanspruchs 11.

Die erfindungsgemäße Vorrichtung zur Wärmeausnutzung zeichnet sich dadurch aus, daß ein Verdampfer bzw. Verdampferbereich, welcher zum Verdampfen zu reagierender Edukte verwendet wird, einstückig bzw. integriert mit einem zweiten Bereich zur wenigstens teilweisen Durchführung der katalytischen Reaktion bzw. zur weiteren Reaktion bei der katalytischen Reaktion entstehender Reaktionsprodukte und/oder zur wenigstens teilweisen Abkühlung bei der katalytischen Reaktion entstehender Reaktionsprodukte ausgebildet ist. Beispielsweise bei der Methanolreformierung kann der zweite Bereich als CO-Oxidator, welcher zur Oxidation von bei der katalytischen Reaktion entstehenden Kohlenmonoxid dient, und/oder als Kühlvorrichtung zur Abkühlung von bei der katalytischen Reaktion entstehenden Reformat ausgebildet sein. Durch die wärmeleitende Verbindung zwischen den beiden Bereichen kann auf die Verwendung weiterer Wärmetauscher im wesentlichen verzichtet werden, bzw. deren Einsatz stark reduziert werden.

Zweckmäßigerweise ist zwischen dem ersten und dem zweiten Bereich eine gasundurchlässige wärmeleitende Trennwand ausgebildet. Hierdurch wird vermieden, daß zu verdampfende Edukte mit bei der katalytischen Reaktion entstehenden CO- bzw. Reformatgasen in Verbindung kommen.

Um die thermischen Spannungen in der Trennebene möglichst gering zu halten, ist die Strömungsrichtung auf mindestens einer Seite senkrecht zu der Trennebene bzw. Trennwand ausgebildet. Hierdurch stellen sich auf der Trennwand weitgehend isotherme Verhältnisse ein.

Gemäß einer bevorzugten Ausführungsform der erfindungsgemäßen Vorrichtung zur Wärmeübertragung sind der erste und/oder der zweite Bereich im wesentlichen aus porösen, gut wärmeleitenden, insbesondere metallischen Werkstoffen hergestellt. Durch diese Maßnahme ist eine große wärmeaustauschende Oberfläche zur Verfügung gestellt. Eine poröse Struktur sorgt ferner wegen der intensiven Durchmischung und Verwirbelung durchströmender Gase bzw. Fluide für eine gute Wärmeübertragung.

Zweckmäßigerweise kann in wenigstens einem der Bereiche Katalysatormaterial enthalten sein.

Es erweist sich als besonders vorteilhaft, daß die jeweiligen Bereiche, insbesondere im Bereich der Trennwand, massiv ausgebildete Regionen aufweisen. Hiermit kann die Wärmeleitung zur Trennwand bzw. Trennfläche hin in wirksamer Weise verbessert werden.

Gemäß einer besonders bevorzugten Ausführungsform der erfindungsgemäßen Vorrichtung zur Wärmeausnutzung sind der erste und der zweite Bereich konzentrisch zueinander ausgebildet, wobei der erste Bereich innerhalb, und der zweite Bereich außerhalb einer rohrförmig ausgebildeten, gasundurchlässigen Trennwand angeordnet ist. Eine derartige Ausgestaltung gestattet bei kleinem Bauraum eine gleichmäßige radiale Beaufschlagung des zweiten Bereiches beispielsweise mit abzukühlenden Reaktionsprodukten.

Zweckmäßigerweise sind im Bereich der Trennwand parallel zu dieser ausgebildete Kanäle im zweiten Bereich ausgebildet, über welche den zweiten Bereich beaufschlagende Gase abführbar sind. Mit dieser Maßnahme können in wirksamer Weise Reaktionsprodukte, welche im zweiten Bereich ausreichend abgekühlt wurden und somit ihre zur Erwärmung des ersten Bereiches verwertbare Wärme abgegeben haben, problemlos aus dem zweiten Bereich abgeführt werden.

Gemäß einer vorteilhaften Ausgestaltung der erfindungsgemäßen Vorrichtung zur Durchführung einer katalytischen Reaktion ist diese als Vorrichtung zur Wasserstofferzeugung aus einem wenigstens einem Kohlenwasserstoff, insbesondere Methanol, und Wasser enthaltendem Reaktionsgemisch ausgebildet, wobei der Katalysator als Reformer zur Durchführung einer Reformierung, insbesondere einer partiellen Oxidation des Reaktionsgemisches zur Herstellung eines Reformats, und das dem Katalysator nachgeschaltete Element als CO-Oxidator zur Oxidation von in dem Reformer entstehendem Kohlenmonoxid und/oder als Reformatkühler zum Abkühlen des in dem Reformer erzeugten Reformats ausgebildet ist. Hiermit ist eine sehr klein bauende Vorrichtung zur Wasserstofferzeugung, welche insbesondere im Automobilbereich verwendbar ist, zur Verfügung gestellt.

Gemäß einer bevorzugten Ausgestaltung der erfindungsgemäßen Vorrichtung zur Durchführung einer katalytischen Reaktion weist diese ein weiteres Element zur Vorwärmung dem Erwärmer/Verdampfer zugeführte Edukte sowie ein weiteres Element zur Abkühlung aus dem dem Katalysator nachgeschalteten Element austretender Reaktionsprodukte auf, wobei diese weiteren Elemente in wärmeleitender Verbindung stehen. Hiermit kann in wirksamer Weise die bei einer katalytischen Reaktion entstehende Wärme optimal ausgenutzt werden.

Es erweist sich als besonders vorteilhaft, den Erwärmer/Verdampfer, das dem Katalysator nachgeschaltete Element und den Katalysator integriert bzw. einstückig auszubilden. Mit dieser Maßnahme sind besonders klein bauende Vorrichtungen zur Durchführung einer katalytischen Reaktion zur Verfügung gestellt, welche besonders für den Einsatz im Automobilbereich geeignet sind.

Gemäß einer bevorzugten Ausgestaltung des erfindungsgemäßen Verfahrens wird dieses zur Wasserstofferzeugung aus wenigstens einem Kohlenwasserstoff, insbesondere Methanol, verwendet, wobei das verdampfte Reaktionsgemisch zur Herstellung eines Reformats in einem als Reformer ausgebildeten Katalysator reformiert, insbesondere partiell oxidiert, wird, und bei der Reformierung entstehendes Kohlenmonoxid einem CO-Oxidator zugeführt wird, und/oder das in dem Reformer hergestellte Reformat einem Reformatkühler zugeführt wird, wobei die bei der CO-Oxidation und/oder der Reformatkühlung freigesetzte Wärme zur Unterstützung der Verdampfung des wenigstens einen Eduktes verwendet wird. Mit einem derartigen Verfahren kann in einfacher und wirksamer Weise bei der Abkühlung des Reformats bzw. der CO-Oxidation entstehende Wärme zum Verdampfen des zu reagierenden Reaktionsgemisches verwendet werden.

Bevorzugte Ausführungsformen der Erfindung werden nun anhand der beigefügten Zeichnung im einzelnen erläutert.

In dieser zeigt
- Fig. 1: eine schematische Darstellung einer bevorzugten Ausführungsform der erfindungsgemäßen Vorrichtung zur Durchführung einer katalytischen Reaktion,
- Fig. 2: eine schematische Darstellung einer erweiterten Ausführungsform der erfindungsgemäßen Vorrichtung zur Durchführung einer katalytischen Reaktion,
- Fig. 3: in schematischer Darstellung eine Schnittansicht einer erfindungsgemäßen Vorrichtung zur Ausnutzung bei einer katalytischen Reaktion entstehenden Wärme,
- Fig. 4: eine um 90° gedrehte Schnittansicht der Vorrichtung gemäß Fig. 3,
- Fig. 5: ein bevorzugtes Ausführungsbeispiel der erfindungsgemäßen Vorrichtung gemäß Figuren 3, 4 in einer Schnittansicht, und
- Fig. 6: eine schematisch seitliche Schnittansicht einer bevorzugten Ausführungsform der erfindungsgemäßen Vorrichtung zur Wasserstofferzeugung.

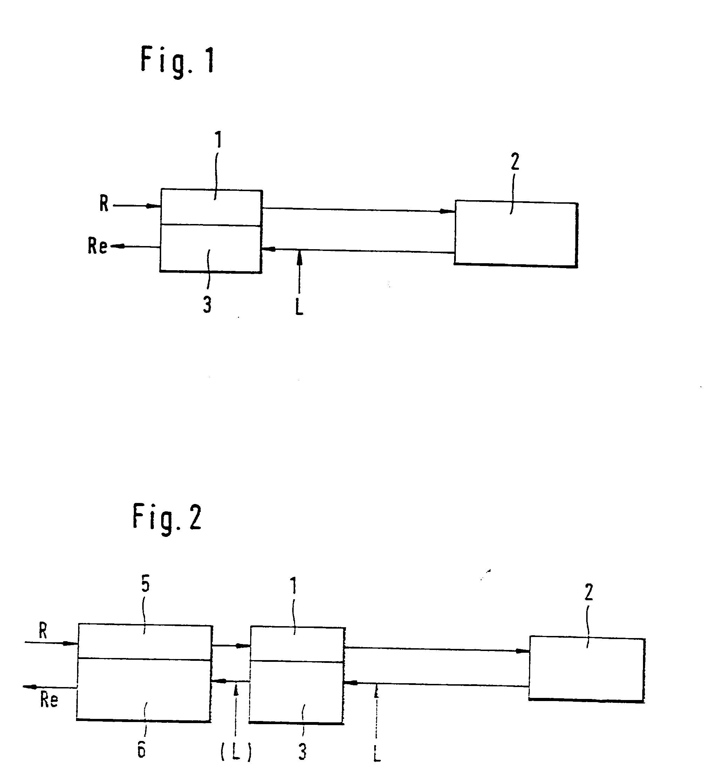

Fig. 1 zeigt in schematisch vereinfachter Darstellung die wesentlichen Komponenten einer erfindungsgemäßen Vorrichtung zur Durchführung einer katalytischen Reaktion am Beispiel einer Vorrichtung zur Wasserstofferzeugung. In einem Verdampfer 1 wird ein Methanol und Wasser umfassendes Reaktionsgemisch (die Zufuhr des Reaktionsgemisches ist mittels des Pfeiles R symbolisiert) zum Verdampfen gebracht und einem Reformer 2 zur partiellen Oxidation (POX-Reformer) zugeführt. In dem Reformer 2 erfolgt eine wenigstens teilweise katalytische Umsetzung des Reaktionsgemisches zu wasserstoffhaltigem Reformat. Das Reformat, welches neben Wasserstoff insbesondere Kohlenmonoxid (CO) umfaßt, wird einem CO-Oxidator bzw. Reformatkühler 3, im folgenden als Bauteil 3 bezeichnet, zugeführt, in welchem das anwesende Kohlenmonoxid wenigstens teilweise oxidiert wird und gleichzeitig das Reformat abgekühlt wird. Das abgekühlte Reformat wird anschließend (eventuell unter Zwischenschaltung weiterer Reformatkühler) einer (nicht dargestellten) Brennstoffzelle zugeführt (Pfeil Re). Zwischen dem Reformer 2 und dem CO-Oxidator bzw. Reformatkühler 3 wird dem Reformat Luft zur Oxidation des anwesenden Kohlenmonoxides beigemischt (mittels Pfeil L symbolisiert).

Der Verdampfer 1 und das Bauteil 3 sind aneinanderliegend bzw. einstückig ausgebildet und stehen miteinander in wärmeleitender Verbindung. Hierdurch wird ausgenutzt, daß der hohe Wärmegehalt des im Reformer 2 erzeugten Reformats an den Verdampfer 1 zum Verdampfen des Reaktionsgemisches übertragen werden kann. Es ist ferner möglich, die bei der CO-Oxidation entstehende Abwärme zum gleichen Zwecke zu nutzen. Es erweist sich als besonders vorteilhaft, daß mittels eines entlang der Lauflänge des CO-Oxidators 3 durch die Abkühlung entstehenden, fallenden Temperaturprofils eine selektive CO-Oxidation durchführbar ist. Es sei angemerkt, daß die Verdampfungstemperatur des Reaktionsgemisches in dem Verdampfer 1 deutlich unterhalb der Temperatur des aus dem Reformer 2 austretenden Reformats liegt. Somit läßt sich das erzeugte Reformat unter gleichzeitiger Verdampfung des Reaktionsgemisches in wirksamer Weise abkühlen.

Der kurze Gasweg mit relativ niedrigem Gasvolumen von der Verdampfer- zur CO-Oxidator bzw. Reformatkühlerseite ermöglicht eine hohe Dynamik.

Es erweist sich als besonders günstig, auch den Reformer 3 integriert mit den Bauteilen 1, 3 auszubilden, wie weiter unten unter Bezug auf ein bevorzugtes Ausführungsbeispiel einer Vorrichtung zur Wasserstofferzeugung noch zu erläutern sein wird.

In Fig. 2 ist eine weitere bevorzugte Ausführungsform der beschriebenen Vorrichtung zur Wasserstofferzeugung dargestellt, welche im Vergleich zur Vorrichtung der Fig. 1 um ein Element 5 zur Eduktvorwärmung und ein weiteres als CO-Oxidator bzw. Reformatkühler dienendes Element 6 erweitert ist. In dem Element 5 kann eine Edukterwärmung bis auf Verdampfungsniveau durchgeführt werden, wobei in dem Element 6 eine weitere Abkühlung des Reformats bis auf die Brennstoffzellentemperatur oder darunter durchgeführt werden kann. Man erkennt, daß dem Reformat zwischen den Bauteilen 3 und 6 weitere Luft zugeführt wird (Pfeil L). Die Elemente 5 und 6 stehen analog zu der integrierten Verdampfer-CO-Oxidator bzw. -Reformatkühleranordnung 1, 3 in wärmeleitender Verbindung.

Es sei angemerkt, daß im Falle einer Zugabe von Luft bzw. Sauerstoff zwischen den Elementen 3 und 6 (bzw. 2 und 3) auch eine weitere CO-Oxidationsstufe in dem Element 6 verwirklicht sein kann, dies insbesondere für den Fall, daß ein entsprechender Katalysator vorgesehen wird.

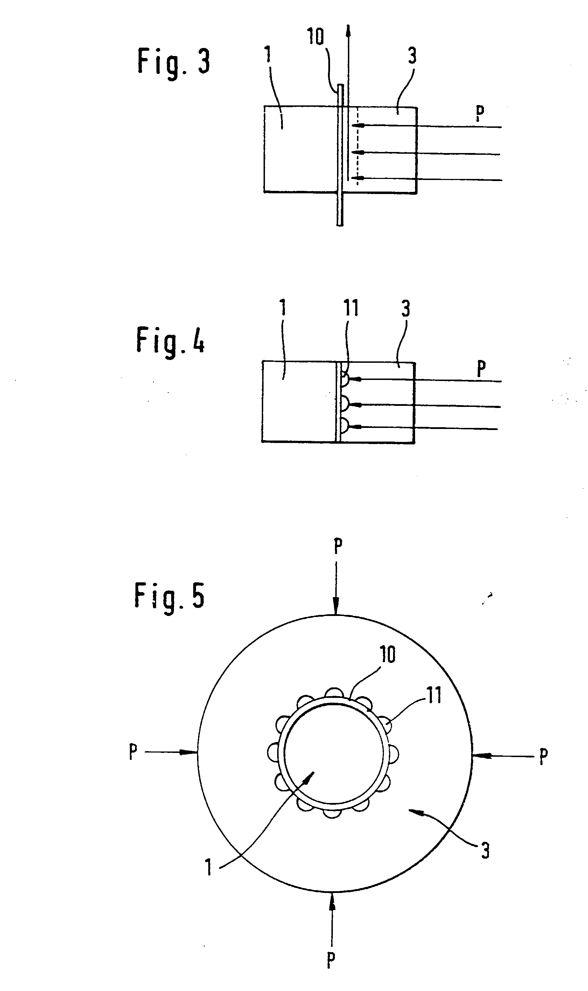

Die integrierte Ausbildung des Verdampfers 1 mit dem CO-Oxidator bzw. dem Reformatkühler 3 ist in den Fig. 3 bis 5 anhand bevorzugter Ausführungsformen im einzelnen dargestellt. Der Verdampfer bzw. Verdampfungsbereich der dargestellten Vorrichtung ist wiederum mit 1 bezeichnet, der Bereich, in welchem die CO-Oxidation des Reformats bzw. dessen Abkühlung durchgeführt wird, mit 3. Zwischen den Bereichen 1 und 3 ist eine gasundurchlässige Trennwand 10 ausgebildet. Die Bereiche 1 und 3 sind aus porösem, gut wärmeleitendem metallischen Material hergestellt. Hierdurch erreicht man eine große wärmeaustauschende Oberfläche. Eine derartige poröse Struktur gewährleistet ferner eine gute Wärmeübertragung bzw. Wärmeaufnahme in Bezug auf durchströmende Gase. Diese Wirkung wird aufgrund der intensiven Durchmischung und Verwirbelung der die porösen Materialien durchströmenden Stoffe erzielt. Aufgrund der Tatsache, daß die Strömungsrichtung im wesentlichen senkrecht zur Trennebene verläuft, weist die Trennwand eine einheitliche Temperatur auf.

In der Fig. 4, welche gegenüber der Fig. 3 eine um 90° verdrehte Ansicht darstellt (Draufsicht), erkennt man in dem Bereich 3 ausgebildete Kanäle 11. Diese Kanäle 11 dienen dazu, Gas, d.h. insbesondere Reaktionsprodukte bzw. Reformat, welches den Bereich 3 in der durch Pfeile P dargestellten Richtung senkrecht zur Trennwand 10 durchströmt, wieder abzuführen. Hierdurch wird gewährleistet, daß das Gas, welches bei dem Durchströmen des Bereiches 3 seine Wärme abgibt, problemlos abgeführt werden kann. Die in den Bereich 3 abgegebene Wärme kann dann über die gasundurchlässige Trennwand 10 hinweg auf den Bereich 1 übertragen werden.

Eine besonders bevorzugte Ausgestaltung dieser integrierten Ausbildung von Verdampfer und CO-Oxidator bzw. Reformatkühler ist in Fig. 5 dargestellt. Man erkennt, daß die Bereiche 1, 3 als konzentrische kreisförmige bzw. zylinderförmige Bereiche ausgebildet sind, welche durch eine gasundurchlässige, zylinderförmige Trennwand 10 voneinander getrennt sind. Analog zu den Fig. 3 und 4 sind auch hier Kanäle 11 im Bereich der Trennwand 10 ausgebildet. Abzukühlendes Gas strömt hierbei radial auf bzw. durch den äußeren Bereich 3, wie durch die Pfeile P in der Fig. 5 angedeutet ist. Zu erwärmende bzw. zu verdampfende Edukte fließen hierbei axial durch den inneren Bereich 1, d.h. in der Darstellung der Fig. 5 in die Zeichenebene hinein bzw. aus dieser heraus. Das den äußeren Bereich 3 radial durchströmende Gas gibt seine Wärme an das poröse Material des Bereiches 3 ab und fließt durch die Kanäle 11 parallel zu der Trennwand 10, d.h. in der Darstellung der Fig. 5 wiederum in die Zeichenebene hinein bzw. aus dieser heraus, ab. Die in dem äußeren Bereich 3 abgegebene Wärme wird über die Trennwand 10 zur Unterstützung der Verdampfung der den inneren Bereich 1 durchströmenden Edukte auf den inneren Bereich 1 übertragen.

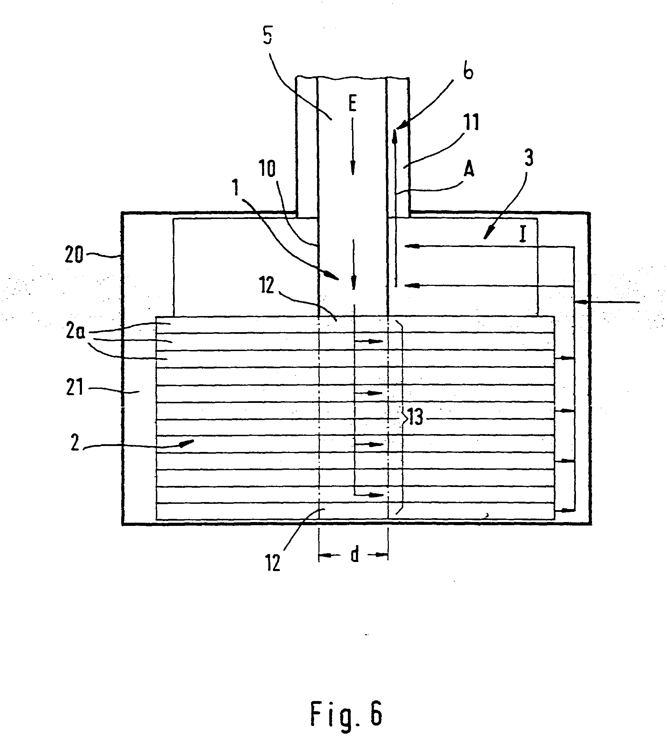

In Fig. 6 ist schließlich eine bevorzugte Ausführungsform einer erfindungsgemäßen Vorrichtung zur Wasserstofferzeugung dargestellt, bei welcher Verdampfer, Reformer und CO-Oxidator und/oder Reformatkühler einstückig bzw. integriert ausgebildet sind.

Gleiche Bauteile, wie sie unter Bezugnahme auf die Fig. 1 bis 5 dargestellt wurden, sind hier mit den gleichen Bezugszeichen versehen.

Bei dem als Stapelreaktor ausgebildeten Reformer 2 handelt es sich beispielsweise um einen Stapelreaktor, welcher aus einzelnen aufeinandergestapelten Katalysatorschichten 2a besteht. Die einzelnen Katalysatorschichten 2a sind beispielsweise durch Verpressen von Katalysatormaterial zu dünnen und großflächigen, stark komprimierten Schichten geformt. Als Katalysatormaterial wird beispielsweise ein feinkörniges Katalysatorpulver oder -granulat verwendet, dessen Körner einen Durchmesser von ca. 0,5 mm oder kleiner haben. Das Verpressen erfolgt beispielsweise bei Temperaturen von 200°C bis 500°C. In dem dargestellten Ausführungsbeispiel sind in den Katalysatorschichten 2a im wesentlichen parallel zu den Längskanten verlaufende Eduktkanäle 12 vorgesehen, die einen senkrecht zur Flächenebene der Katalysatorschichten 2a durchgehenden Führungskanal 13 bilden (strichpunktiert dargestellt). Die Eduktkanäle bzw. der Führungskanal 13 sind bzw. ist im dargestellten Ausführungsbeispiel mittig in den einzelnen Katalysatorschichten 2a gebildet, und weisen bzw. weist ferner einen Durchmesser d auf. Der als Stapelreaktor ausgebildete Reformer 2 weist nicht im einzelnen dargestellte Kanäle auf, welche sich senkrecht zur Erstreckungsrichtung des Eduktkanals 13 durch die jeweiligen Katalysatorschichten 2a erstrecken. Auf dem Reformer 2 aufliegend ist eine Vorrichtung, wie sie unter Bezugnahme auf die Fig. 3 bis 5 dargestellt wurde, aufgebracht. Der erste, als Verdampfer dienende Bereich 1 ist hierbei fluchtend mit dem Eduktkanal 13 angeordnet. Der den Bereich 1 konzentrisch umgebende Bereich 3 zur CO-Oxidation bzw. zur Reformatkühlung weist eine etwas kleinere axiale Erstreckung als die einzelnen Katalysatorschichten 2a auf. Reformer 2, Verdampfer 1 sowie CO-Oxidator bzw. Reformatkühler 3 sind innerhalb eines Gehäuses 20 angeordnet. Man erkennt, daß das Gehäuse 20 derart dimensioniert ist, daß zwischen der Außenseite des Reformers 2 bzw. des CO-Oxida-tors /Reformatkühlers 3 ein Zwischenraum 21 verbleibt.

Es sei angemerkt, daß die gasundurchlässige Trennwand zwischen Verdampfer 1 und Oxidator/Reformatkühler 3 lediglich schematisch dargestellt ist, wobei auf eine Darstellung der im Bereich der Trennwand ausgebildeten Kanäle zum Abführen von abgekühltem Gas im Inneren des Oxidators/Reformatkühlers aus Gründen der Anschaulichkeit verzichtet ist. Man erkennt lediglich die aus dem Oxidator/Reformatkühler vorragenden Verlängerungen der Kanäle.

Zu reagierende Edukte, im Falle der Herstellung von Wasserstoff üblicherweise ein Methanol und Wasser enthaltendes Reaktionsgemisch, wird, wie durch den Pfeil E angedeutet, in den Verdampfungsbereich 1 eingeführt. Über den Eduktkanal 13 wird das in dem Verdampfer 1 verdampfte Reaktionsgemisch (über die nicht im einzelnen dargestellten Kanäle) in die jeweiligen Katalysatorschichten 2a eingeführt, wo es zur katalytischen Reaktion des Reaktionsgemisches kommt. Partiell reagierte Gase treten an den Außenseiten der Katalysatorschichten 2a aus, wie durch die seitlichen Pfeile dargestellt ist, werden nach oben geführt und beaufschlagen den CO-Oxidator/Reformatkühler 3 radial von außen. Bei der Durchströmung des CO-Oxidators/Reformatkühlers 3 radial nach innen (Pfeile I) geben die durch die katalytische Reaktion erwärmten Gase bzw. Reaktionsprodukte ihre Wärme ab, und strömen durch die Kanäle 10, von denen in Fig. 5 lediglich die aus dem Oxidator/Reformatkühler vorragenden Bereiche dargestellt sind, aus dem CO-Oxida-tor/Reformatkühler 3 aus (Pfeil A). Die in dem CO-Oxidator/Reformatkühler 3 abgegebene Wärme wird zur Verdampfung des einströmenden Gases auf den Verdampfungsbereich 1 übertragen.

Die unter Bezugnahme auf Fig. 6 dargestellte Ausführungsform mit einer integrierten Ausbildung von Reformer, Verdampfer und CO-Oxidator/Reformatkühler erweist sich aufgrund der sehr geringen Gaswege und der relativ niedrigen einzusetzenden Gasvolumina insbesondere bei mobilen Anwendungen als besonders günstig.

Es sei angemerkt, daß die unter Bezugnahme auf Fig. 6 am Beispiel einer Vorrichtung zur Wasserstofferzeugung dargestellte Anordnung auch für andere katalytische Reaktionen, bei welchen einerseits Reaktionswärme entsteht, andererseits Edukte zu erwärmen bzw. zu verdampfen sind, verwendbar ist.

Die Verlängerung des Verdampfers bzw. Verdampfungsbereiches 1 ist hierbei vorzugsweise als Element zur Eduktvorwärmung, wie es unter Bezugnahme auf Fig. 2 mit Bezugszeichen 5 bezeichnet war, ausgebildet. Ferner ist die dargestellte Verlängerung der Kanäle 10 vorteilhafterweise als Kühlelement ausgebildet, wie es unter Bezugnahme auf Fig. 2 mit Bezugszeichen 6 bezeichnet ist. Derartige Elemente 5, 6 können sich unmittelbar an die in Fig. 6 dargestellte Vorrichtung anschließen, oder beispielsweise durch kanalartige Übergänge, wie sie in der Figur dargestellt sind, eine gewünschte Beabstandung aufweisen.

## Patentansprüche

1. Vorrichtung zur Ausnutzung bei einer katalytischen Reaktion entstehender Wärme mit einem ersten Bereich (1) zum Erwärmen, insbesondere zum Verdampfen, wenigstens eines zu reagierenden Eduktes, insbesondere eines Reaktionsgemisches, und einem zweiten Bereich (3) zur wenigstens teilweisen Durchführung der katalytischen Reaktion bzw. zur weiteren Reaktion bei der katalytischen Reaktion entstehender Reaktionsprodukte und/oder zur wenigstens teilweisen Abkühlung bei der katalytischen Reaktion entstehender Reaktionsprodukte, wobei der erste Bereich (1) und der zweite Bereich (3) in wärmeleitender Verbindung stehen,
**dadurch gekennzeichnet,**
daß zwischen dem ersten Bereich (1) und dem zweiten Bereich (3) eine gasundurchlässige, wärmeleitende Trennwand (10) ausgebildet ist, wobei die Strömungsrichtung der Reaktionsprodukte in dem zweiten Bereich (3) beim Abkühlen und/oder einem durch die wenigstens teilweise katalytische Reaktion bzw. die weitere Reaktion bedingten Aufheizen senkrecht zu der Trennebene verläuft.

2. Vorrichtung nach Anspruch 1, dadurch gekennzeichnet, daß zwischen dem ersten Bereich (1) und dem zweiten Bereich (3) eine gasundurchlässige, wärmeleitende Trennwand (10) ausgebildet ist, wobei insbesondere die Strömungsrichtung beim Abkühlen und/oder Aufheizen senkrecht zu der Trennebene verläuft.

3. Vorrichtung nach einem der Ansprüche 1 oder 2, dadurch gekennzeichnet, daß der erste Bereich (1) und/oder der zweite Bereich (3) wenigstens teilweise aus porösem, gut wärmeleitendem, insbesondere metallischem Werkstoff hergestellt ist.

4. Vorrichtung nach einem der vorstehenden Ansprüche, dadurch gekennzeichnet, daß in wenigstens einem der Bereiche (1, 3) ein Katalysatormaterial vorgesehen ist.

5. Vorrichtung nach einem der vorstehenden Ansprüche, dadurch gekennzeichnet, daß die Bereiche (1, 3), insbesondere im Bereich der Trennwand (10), massiv ausgebildete Regionen aufweisen.

6. Vorrichtung nach einem der vorstehenden Ansprüche, dadurch gekennzeichnet, daß der erste Bereich (1) und der zweite Bereich (3) konzentrisch zueinander ausgebildet sind, wobei der erste Bereich (1) innerhalb, und der zweite Bereich (3) außerhalb der rohrförmig ausgebildeten, gasundurchlässigen Trennwand (10) angeordnet ist.

7. Vorrichtung zur Durchführung einer katalytischen Reaktion mit einem Erwärmer/Verdampfer (1) zum Erwärmen bzw. Verdampfen wenigstens eines zu reagierenden Eduktes, insbesondere eines Reaktionsgemisches, einem Katalysator (2) zur wenigstens teilweisen Durchführung der katalytischen Reaktion, sowie einem dem Katalysator (2) nachgeschalteten Element (3) zum weiteren Reagieren und/oder zum Abkühlen bei der katalytischen Reaktion entstehender Reaktionsprodukte, wobei der Erwärmer/Verdampfer (1) und das nachgeschaltete Element (3) in wärmeleitender Verbindung stehen,
**dadurch gekennzeichnet,**
daß zwischen dem Erwärmer/Verdampfer (1) und dem nachgeschalteten Element (3) eine gasundurchlässige, wärmeleitende Trennwand (10) ausgebildet ist, wobei die Strömungsrichtung der Reaktionsprodukte in dem nachgeschalteten Element (3) beim Abkühlen und/oder einem durch die wenigstens teilweise katalytische Reaktion bzw. die weitere Reaktion bedingten Aufheizen senkrecht zu der Trennebene verläuft.

8. Vorrichtung nach Anspruch 7 zur Wasserstofferzeugung aus einem wenigstens einen Kohlenwasserstoff, insbesondere Methanol, und Wasser enthaltenden Reaktionsgemisch, dadurch gekennzeichnet, daß der Katalysator als Reformer zur Durchführung einer Reformierung, insbesondere einer partiellen Oxidation des Reaktionsgemisches zur Herstellung eines Reformats, und das nachgeschaltete Element (3) als CO-Oxidator zur Oxidation von in dem Reformer (2) entstehendem Kohlenmonoxid und/oder als Reformatkühler (3) zum Abkühlen des in dem Reformer erzeugten Reformats ausgebildet ist.

9. Vorrichtung nach einem der Ansprüche 7 oder 8, dadurch gekennzeichnet, daß sie ein weiteres Element (5) zur Vorwärmung dem Erwärmer/Verdampfer (1) zugeführter Edukte sowie ein weiteres Element (6) zur weiteren Abkühlung aus dem Element (3) austretender Reaktionsprodukte aufweist, wobei die Elemente (5, 6) in wärmeleitender Verbindung stehen.

10. Vorrichtung nach einem der Ansprüche 7 bis 9, dadurch gekennzeichnet, daß der Erwärmer/Verdampfer (1), das dem Katalysator nachgeschaltete Element (3) und der Katalysator (2) integriert bzw. einstückig ausgebildet sind.

11. Verfahren zur Durchführung einer katalytischen Reaktion mit folgenden Verfahrensschritten:
- Verdampfen wenigstens eines Eduktes, insbesondere eines zu reagierenden Reaktionsgemisches,
- wenigstens teilweise katalytische Reaktion des verdampften Eduktes,
- weitere Reaktion und/oder Abkühlung bei der katalytischen Reaktion entstehender Reaktionsprodukte,
**dadurch gekennzeichnet,**
daß die bei der wenigstens teilweisen katalytischen Reaktion und/oder der weiteren Reaktion und/oder der Abkühlung der bei der katalytischen Reaktion entstandenen Reaktionsprodukte freigesetzte Wärme zur Unterstützung der Verdampfung verwendet wird.

12. Verfahren nach Anspruch 11 zur Wasserstofferzeugung aus einem wenigstens einem Kohlenwasserstoff, insbesondere Methanol , und Wasser enthaltenen Reaktionsgemisch, dadurch gekennzeichnet, daß das verdampfte Reaktionsgemisch zur Herstellung eines Reformats in einem als Reformer (2) ausgebildeten Katalysator reformiert, insbesondere partiell oxidiert wird, und bei der Reformierung entstehendes Kohlenmonoxid einem CO-Oxidator zugeführt wird, und/oder das in dem Reformer hergestellte Reformat einem Reformatkühler (3) zugeführt wird, wobei die bei der CO-Oxidation und/oder der Reformatkühlung freigesetzte Wärme zur Unterstützung der Verdampfung des Reaktionsgemisches verwendet wird.
